(19) Europäisches Patentamt
European Patent Office
Office européen des brevets

(11) Veröffentlichungsnummer: **0 061 039**
**B1**

# (12) EUROPÄISCHE PATENTSCHRIFT

(45) Veröffentlichungstag der Patentschrift: **10.10.84**

(51) Int. Cl.³: **C 09 B 5/24,** C 07 D 209/58

(21) Anmeldenummer: **82101716.7**

(22) Anmeldetag: **05.03.82**

(54) **Verfahren zur Herstellung von anthrachinoiden Dispersionsfarbstoffen.**

(30) Priorität: **14.03.81 DE 3109951**

(43) Veröffentlichungstag der Anmeldung: **29.09.82 Patentblatt 82/39**

(45) Bekanntmachung des Hinweises auf die Patenterteilung: **10.10.84 Patentblatt 84/41**

(84) Benannte Vertragsstaaten: **CH DE GB LI**

(56) Entgegenhaltungen:
**DE - A - 2 016 794**
**GB - A - 747 845**
**US - A - 2 628 963**
**US - A - 2 753 356**
**US - A - 3 835 154**
**US - A - 3 835 155**

**CHEMICAL ABSTRACTS, Band 86, Nr. 10, 7. Marz 1977, Seite 83, Nr. 56748t, Columbus, Ohio, USA**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Niess, Rolf, Dr., Portheide 54, D-6707 Schifferstadt (DE)**
Erfinder: **Schaeffer, Karl, Georg-Buechner-Strasse 14, D-6700 Ludwigshafen (DE)**

**EP 0 061 039 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von anthrachinoiden Dispersionsfarbstoffen.

Farbstoffe der Formel

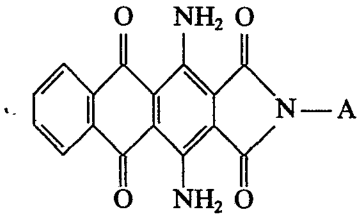

(I)

in der A für Alkyl, Alkoxyalkyl, Hydroxyalkyl, Phenoxyalkyl oder Phenylaminoalkyl steht, werden nach den US-PS 3 835 154, 2 753 356 und 2 628 963 durch Umsetzen von Verbindungen der Formel I mit A=H mit Aminen der Formel A—$NH_2$ in organischen Lösungsmitteln erhalten. Diese Verfahren haben den Nachteil, daß teure organische Lösungsmittel oder Lösungsmittelgemische benötigt werden, die aus wirtschaftlichen und ökologischen Gründen aufgearbeitet werden müssen. Außerdem müssen die Ausgangsstoffe trocken und in gemahlener Form vorliegen.

Aus der DE-PS 1 073 661 ist bekannt, daß l-Imino-3-oxo-4,7-diamino-5,6-phthaloyl-dihydroisoindol mit aliphatischen Aminen in inerten Lösungsmitteln, z. B. Methanol oder in überschüssigen Amin unter Austausch der =NH-Gruppe zu Verbindungen der Formel

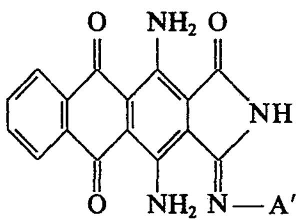

(II)

in der A' für einen aliphatischen Rest steht, reagieren.

Aufgabe der vorliegenden Erfindung war es, ein einfaches und kostengünstiges Verfahren zur Herstellung von anthrachinoiden Dispersionsfarbstoffen der unten angegebenen Formel aufzufinden, nach dem die Farbstoffe in hoher Ausbeute und guter Qualität erhalten werden. Außerdem sollte das Verfahren umweltfreundlich sein.

Gegenstand der Erfindung ist somit ein Verfahren zur Herstellung von anthrachinoiden Dispersionsfarbstoffen der Formel

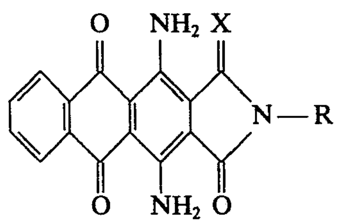

(III)

in der X=O oder =NH und R $C_1$- bis $C_{12}$-Alkyl, $C_2$- bis $C_6$-Hydroxyalkyl, Alkoxyalkyl mit insgesamt 3 bis 12 C-Atomen, $C_5$- bis $C_8$-Cycloalkyl, Phenoxy-$C_2$- oder $C_3$-alkyl, Phenalkyl mit insgesamt 7 bis 10 C-Atomen oder Phenyl-$C_1$- bis $C_4$-alkoxy-$C_2$ oder $C_3$-alkyl bedeuten, durch Umsetzen von Verbindungen der Formel

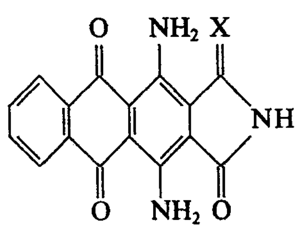

(IV)

mit Aminen der Formel

$$R{-}NH_2 \quad (V)$$

worin X und R die oben angegebene Bedeutung haben, in Flüssigkeiten in der Wärme, das dadurch

gekennzeichnet ist, daß man die Umsetzung in Wasser durchführt.

Die Verfahrensprodukte sind wertvolle Dispersionsfarbstoffe, die auf synthetischen hydrophobem Fasermaterial brillante grünstichigblaue Färbungen geben, die lichtecht, sublimationsecht und waschecht sind.

Nach dem Verfahren erhält man die Farbstoffe der Formel (III) in hoher Raum-Zeit-Ausbeute bei gleichzeitig hoher Reinheit. Im Gegensatz zu dem aus der DE-PS 1 073 661 bekannten Verfahren erhält man nach dem Verfahren der vorliegenden Erfindung mit Verbindungen der Formel (IV), in der X = > NH ist, praktisch nur Verfahrensprodukte der Formel (III).

Das Verfahren gemäß der vorliegenden Erfindung ist wesentlich wirtschaftlicher als die bekannten Verfahren, da keine kostspieligen Lösungsmittel erforderlich sind und demzufolge auch nicht aufgearbeitet werden müssen. Ein weiterer Vorteil ist, daß die Ausgangsstoffe (IV) in Form des bei der Synthese anfallenden feuchten Filtergutes verwendet werden.

Für R kommen $C_1$- bis $C_{12}$-Alkyl, $C_2$- bis $C_6$-Hydroxyalkyl, Alkoxyalkyl mit insgesamt 3 bis 12 C-Atomen, Cycloalkyl mit 5 bis 8 C-Atomen, Phenoxy-$C_2$- und $C_3$-alkyl Phenalkyl mit insgesamt 7 bis 10 C-Atomen und $C_7$- bis $C_{10}$-Phenalkoxy-$C_2$- und $C_3$-alkyl in Betracht.

Im einzelnen sind z. B. zu nennen:

1. $C_1$- bis $C_{12}$-, insbesondere $C_1$- bis $C_8$-Alkyl: Methyl, Ethyl, n- und i-Propyl,n- und i-Butyl, sec.Butyl, Pentyl, Hexyl, Octyl, 2-Ethylhexyl, Decyl und Dodecyl.
2. Hydroxyalkyl: 2-Hydroxyethyl, 2- und 3-Hydroxypropyl,1-Hydroxybutyl-(4), 2-Hydroxy-butyl-(3), 6-Hydroxyhexyl-(1);
3. Alkoxyalkyl mit insgesamt 3 bis 12 C-Atomen: 2-Methoxyethyl, 2-Ethoxyethyl, 2-n- und i-Propoxyethyl, 2 n- und i-Butoxyethyl, 2-(2'-Ethylhexoxy)-ethyl, 3-Methoxypropyl, 3-Ethoxypropyl, 3-n und i-Propoxypropyl, 3-n- und i-Butoxypropyl, 3-(2'-Ethylhexoxy)-propyl, 3-(n-Octoxy)-propyl;
4. Cycloalkyl: Cyclopentyl, Cyclohexyl, Cycloheptyl und Cyclooctyl;
5. Phenalkyl: Benzyl, 2-Phenylethyl, 3-Phenylpropyl, 2-Phenylpropyl, 4-Phenylbutyl, 3-Phenylbutyl;
6. Phenoxy-$C_2$- und $C_3$-alkyl: Phenoxyethyl, Phenoxypropyl;
7. Phenalkoxy-alkyl: Benzyloxethyl, 2-Benzyloxypropyl, 3-Benzyloxypropyl.

Vorzugsweise steht R für $C_2$- und $C_3$-Hydroxyalkyl und Alkoxyalkyl mit insgesamt 3 bis 12 C-Atomen.

Das Verfahren wird im allgemeinen so durchgeführt, daß man die Verbindung der Formel (IV) oder ein Verbindungsgemisch von Verbindungen mit X = > O und > NH in eine Mischung aus Wasser und dem Amin $R-NH_2$ einträgt und die Suspension auf die gewünschte Temperatur erwärmt. Die Umsetzung erfolgt in der Regel zwischen 70 und 100°C rasch und quantitativ. Vorzugsweise arbeitet man bei Temperaturen von 80 bis 100°C, insbesondere von 90 bis 100°C.

Die Reaktionszeit liegt je nach dem angewendeten Amin (V) und in Abhängigkeit von der Temperatur zwischen 0,5 und 10, in den meisten Fällen zwischen 2 und 5 Stunden. Unterhalb 80°C verläuft die Umsetzung sehr langsam.

Die Wassermenge ist für das Gelingen der Reaktion nicht kritisch, wenn das Reaktionsgemisch vor, während und nach der Umsetzung durchmischbar ist. Vorzugsweise verwendet man — bezogen auf (IV) — die 4- bis 6fache Gewichtsmenge an Wasser.

Die Menge an dem Amin V beträgt mindestens die stöchiometrisch erforderliche Menge. In der Regel wird man das Amin im Überschuß anwenden, vorteilhafterweise 1,2 bis 3 Mol je Mol (IV).

Man kann die Reaktion auch in Gegenwart von kationischen oder nichtionischen oberflächenaktiven Mitteln durchführen, wobei die Menge bis zu 60 Gew.-%, bezogen auf (IV), betragen kann. Falls durch die Gegenwart der oberflächenaktiven Mittel die Umsetzung beschleunigt wird, reichen in der Regel 10 bis 40 Gew.-%, bezogen auf (IV), von diesen Mitteln.

Als kationische oberflächenaktive Mittel kommen z. B. Ammoniumsalze der Formel

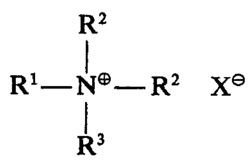

in Betracht; in der Formel bedeuten: $R^1$ $C_4$- bis $C_{20}$-Alkyl, vorzugsweise $C_8$- bis $C_{20}$-Alkyl und $R^2$ und $R^3$ je $C_1$- bis $C_4$-Alkyl, vorzugsweise Methyl; oder $R^1$ und $R^3$ je $C_8$- bis $C_{20}$-Alkyl und $R^2$ $C_1$- bis $C_4$-Alkyl, vorzugsweise Methyl; oder $R^1$ $C_7$- bis $C_{10}$-Phenalkyl, $R^2$ $C_1$- bis $C_4$-Alkyl und $R^3$ Phenyl oder $C_1$- bis $C_{20}$-Alkyl; oder $R^1$ $C_8$- bis $C_{20}$-Alkyl oder $C_7$- bis $C_{10}$-Phenalkyl und

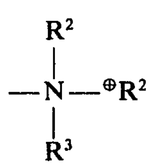

Pyridinium und $X^{\ominus}$ ein Äquivalent eines Anions.

Als nichtionische oberflächenaktive Mittel kommen Ethylenoxidaddukte oder Propylenoxid-Ethylenoxidaddukte von $C_2$- bis $C_6$-Akandiolen und $C_3$- bis $C_6$-Alkanpolyolen mit bis zu 5 Hydroxygruppen und Ethylenoxidaddukte von $C_4$- bis $C_{20}$-Alkylphenolen in Betracht.

In der Regel ist jedoch beim Verfahren gemäß der vorliegenden Erfindung die Anwendung der genannten oberflächenaktiven Mittel nicht erforderlich.

Das Reaktionsgemisch wird in üblicher Weise aufgearbeitet. Das Verfahrensprodukt wird durch Filtrieren oder Zentrifugieren von der Mutterlauge abtrennt und mit warmem Wasser gewaschen. Die Mutterlauge, die den Überschuß an dem Amin und gegegenenfalls oberflächenaktives Mittel enthält, kann viermal und noch öfter als Reaktionsmedium wiederverwendet werden.

Die folgenden Ausführungsbeispiele sollen das Verfahren gemäß der vorliegenden Erfindung weiter erläutern. Die im folgenden genannten Teile und Prozentangaben beziehen sich auf das Gewicht.

## Beispiel 1

300 Teile 1,4-Diaminoanthrachinon-2,3-dicarboximid (Formel IV, X=O; 96%ig wurden in eine Mischung aus 150 Teilen des Umsetzungsprodukts von Nonylphenol mit 14 Mol Ethylenoxid/Mol Phenol und 1300 Teilen Wasser eingetragen und unter Rühren auf 80°C erwärmt. Bei dieser Temperatur wurden 200 Teile 3-Methoxypropylamin zugegeben und das Gemisch auf Rückflußtemperatur (98 bis 100°C) erwärmt. Nach 3 Stunden wurden 100 Teile Methoxypropylamin nachgesetzt und weitere 2 Stunden bei Rückflußtemperatur gehalten. Anschließend wurde durch Zugeben von 500 Teilen kaltem Wasser die Temperatur auf 75°C gestellt und die Suspension abgesaugt. Das Filtergut wurde mit Warmwasser (ca. 60°C) gewaschen. Ausbeute: 1050 Teile feuchtes Preßgut, das 349,7 Teile des Farbstoffs der Formel III (X=O; R=$-(CH_2)_3-OCH_3$) enthielt, der Polyester in brillanten, grünstichigblauen Farbtönen färbt.

## Beispiel 2

Ein Gemisch aus 300 Teilen 1,4-Diaminoanthrachinon-2,3-dicarboximid (Formel IV,X=O) in Form als 46,2%igen wäßrigen Preßkuchens, 1000 Teilen Wasser und 300 Teilen 3-Methoxypropylamin wurde unter Rühren auf Rückflußtemperatur erwärmt (98 bis 100°C) und 5 Stunden bei dieser Temperatur gehalten. Die Suspension wurde auf 70°C abgekühlt, abgesaugt und mit warmem Wasser von 60°C gewaschen. Ausbeute: 1013 Teile feuchtes Preßgut, das 354,3 Teile des Farbstoffs der Formel (III, X=O; R=$-(CH_2)_3-OCH_3$) enthielt. Der Farbstoff färbt Polyester in brillanten, grünstichigblauen Farbtönen.

## Beispiel 3

Ein Gemisch aus 325 Teilen eines feuchten Filtergutes, das 150 Teile 1,4-Diaminoanthrachinon-2,3-dicarboximid enthielt, 700 Teilen Wasser und 150 Teilen 3-Ethoxypropylamin wurde 5 Stunden auf Rückflußtemperatur (98 bis 100°C) erwärmt. Die auf 70°C abgekühlte Suspension wurde abgesaugt und mit Warmwasser gewaschen. Ausbeute: 598 Teile Preßgut, das 184,8 Teile des Farbstoffs der Formel III (X=O, R=$-(CH_2)_3-OC_2H_5$) enthielt. Der Farbstoff färbt Polyester in brillanten, grünstichblauen Farbtönen.

## Beispiel 4

Es wurde wie in Beispiel 3 verfahren, jedoch wurde anstelle von 3-Ethoxypropylamin 3-Isopropoxypropylamin verwendet. Der isolierte Preßkuchen enthielt 189,3 Teile Farbstoff der Formel III (X=O; R=$-(CH_2)_3-OCH(CH_3)_2$).

## Beispiel 5

Es wurde wie in Beispiel 3 verfahren, jedoch wurde anstelle von 3-Ethoxypropylamin ein Gemisch aus 50 Teilen 3-Methoxypropylamin und 100 Teilen 3-Isopropoxypropylamin verwendet. Der isolierte Preßkuchen enthielt 182,6 Teile Farbstoffgemisch (Formel III, (X=O; R=$-(CH_2)_3-OCH_3$ und $-(CH_2)_3-OCH(CH_3)_2$).

Beispiel 6

Es wurde wie in Beispiel 3 gearbeitet, jedoch wurde anstelle von 3-Ethoxypropylamin Ethanolamin verwendet. Der isolierte Preßkuchen enthielt 164,7 Teile Farbstoff der Formel III mit X=O und $R = -CH_2-CH_2-OH$.

Beispiel 7

30 Teile eines Gemisches aus 1,4-Diaminoanthrachinon-2,3-dicarboximid und 1-Hydroxy-3-amino--4,7-diamino-5,6-phthaloylisoindolenin in Form des feuchten Filterguts wurden in eine Mischung aus 9 Teilen des Adduktes von EO an Nonylphenol (14 : 1 Mol), 130 Teilen Wasser und 30 Teilen 3-Methoxypropylamin eingetragen und 6 Stunden auf Rückflußtemperatur (98 bis 100°C) erwärmt. Die Suspension wurde auf 75°C abgekühlt, abgesaugt und das Filtergut mit Warmwasser gewaschen. Ausbeute: 68,8 Teile Preßgut, das 37,2 Teile eines Gemische enthielt, das praktisch nur aus Farstoffen der Formel III mit X=O und >NH und $R = -(CH_2)_3-OCH_3$ besteht. Das Farbstoffgemisch färbt Acetat und Polyester in brillanten, grünstichigblauen Farbtönen.

Beispiel 8

In eine Mischung aus 1300 Teilen Wasser, 150 Teilen des Adduktes von 14 Mol EO an 1 Mol Nonylphenol, 100 Teilen Methoxypropylamin, 100 Teilen Äthoxypropylamin und 100 Teilen Isopropoxypropylamin wurden bei Raumtemperatur unter Rühren 300 Teile 1,4-Diaminoanthrachinon-2,3-dicarboximid (Formel IV, X=O; 94,1%ig) eingetragen. Die Suspension wurde auf Rückflußtemperatur (98 bis 100°C) erwärmt und ca. 4 Stunden bei dieser Temperatur gehalten. Anschließend wurde durch Kühlen und Zugeben von 500 Teilen kaltem Wasser die Temperatur auf 75°C gestellt und die Suspension abgesaugt. Ausbeute: 1098 Teile Preßgut, das 372,5 Teile eines Gemisches von Farbstoffen der Formel III mit X=O und $R = -(CH_2)_3-OCH_3, -(CH_2)_3-OC_2H_5$, und $-(CH_2)_2-O-CH(CH_3)_2)$ enthielt. Das Farbstoffgemisch färbt Polyester und Acetat in brillanten, grünstichigblauen -arbtönen.

Beispiel 9

150 Teile 1,4-Diaminoanthrachinon-2,3-dicarboximid (Formel IV, X=O; 96%ig) wurden in eine Mischung aus 50 Teilen EO-Nonylphenoladdukt (14 : 1 Mol), 600 Teilen Wasser und 150 Teilen 3-Isopropoxypropylamin eingetragen und unter Eigendruck auf 98 bis 100°C erwärmt. Nach 7 Stunden wird auf Raumtemperatur abgekühlt und die Suspension abgesaugt. Das Filtergut wurde mit Warmwasser (ca. 60°C) gewaschen. Ausbeute: 575 Teile Preßgut, das 188,5 Teile des Farbstoffs der Formel III (X=O; $R = -(CH_2)_3-O-CH(CH_3)_2$ enthielt, der Polyester in brillanten, grünstichigblauen Farbtönen färbte.

**Patentansprüche**

1. Verfahren zur Herstellung von anthrachinoiden Dispersionsfarbstoffen der Formel

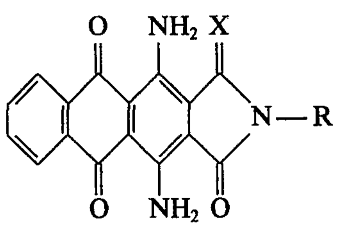

in der X=O oder =NH und R $C_1$- bis $C_{12}$-Alkyl, $C_2$- bis $C_6$-Hydroxyalkyl, Alkoxyalkyl mit insgesamt 3 bis 12 C-Atomen, $C_5$- bis $C_8$-Cycloalkyl, Phenoxy-$C_2$- oder $C_3$-alkyl, Phenalkyl mit insgesamt 7 bis 10 C-Atomen oder Phenyl-$C_1$- bis $C_4$-alkoxy-$C_2$ oder $C_3$-alkyl bedeuten, durch Umsetzen von Verbindungen der Formel

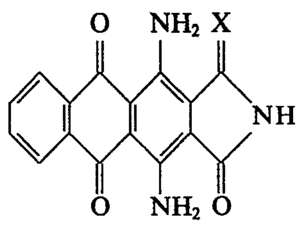

mit Aminen der Formel

R—$NH_2$

worin X und R die oben angegebene Bedeutung haben, in Flüssigkeiten in der Wärme, dadurch gekennzeichnet, daß man die Umsetzung in Wasser durchführt.

2. Verfahren gemäß Anspruch 1, dadurch gekennzeichnet, daß man die Umsetzung bei 70 bis 100°C durchführt.

3. Verfahren gemäß Anspruch 1 oder 2, dadurch gekennzeichnet, daß man die Umsetzung in Gegenwart von kationischen oder nichtionischen oberflächenaktiven Mitteln durchführt.

4. Verfahren gemäß Anspruch 3, dadurch gekennzeichnet, daß man bis zu 60 Gew.%, bezogen auf die anthrachinoide Ausgangsverbindung, an oberflächenaktiven Mitteln verwendet.

**Claims**

1. A process for the preparation of an anthraquinoid disperse dye of the formula

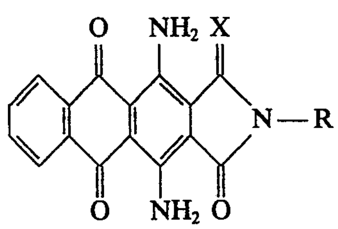

where X is =O or =NH and R is $C_1$—$C_{12}$-alkyl, $C_2$—$C_6$-hydroxyalkyl, alkoxyalkyl having a total of 3 to 12 carbon atoms, $C_5$—$C_8$-cycloalkyl, phenoxy-$C_2$- or -$C_3$-alkyl, phenalkyl having a total of 7 to 10 carbon atoms or phenyl-$C_1$—$C_4$-alkoxy-$C_2$- or -$C_3$-alkyl, by reacting a compound of the formula

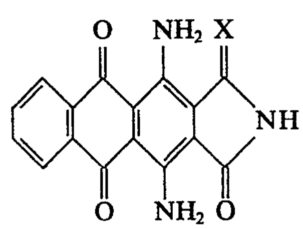

with an amine of the formula

R—$NH_2$

where X and R have the above meanings, in a liquid under heat, wherein the reaction is carried out in water.

2. A process as claimed in claim 1, wherein the reaction is carried out at from 70 to 100°C.

3. A process as claimed in claim 1 or 2, wherein the reaction is carried out in the presence of a cationic or non-ionic surfactant.

4. A process as claimed in claim 3, wherein up to 60% by weight, based on the anthraquinoid starting compound, of surfactant is used.

**Revendications**

1. Procédé de préparation de colorants dispersés anthraquinoïdes de formule

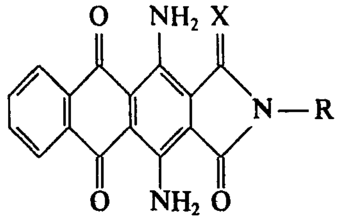

dans laquelle X=O ou =NH et R représente un groupe alkyle en C1—C12, hydroxyalkyle en C2—C6, alcoxyalkyle contenant au total 3 à 12 atomes de carbone, cycloalkyle en C5—C8, phénoxy-alkyle en C2 ou C3, phénalkyle contenant au total 7 à 10 atomes de carbone ou phényl-(alcoxy en CL—C4)-alkyle en C2 ou C3, par réaction de composés de formule

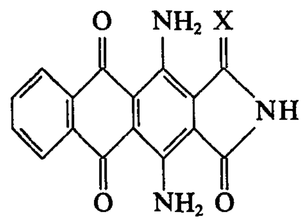

avec des amines de formule

$R-NH_2$

dans laquelle X et R ont les significations indiquées ci-dessus, dans des liquides à chaud, caractérisé en ce que l'on effectue la réaction dans l'eau.

2. Procédé selon la revendication 1 caractérisé en ce que l'on effectue la réaction à une température de 70 à 100° C.

3. Procédé selon la revendication 1 ou 2 caractérisé en ce que l'on effectue la réaction en présence d'agents tensio-actifs cationiques ou non-ioniques.

4. Procédé selon la revendication 3 caractérisé en ce que l'on utilise les agents tensio-actifs en quantités allant jusqu'à 60% du poids du composé de départ anthraquinoïde.